(19) Europäisches Patentamt / European Patent Office / Office européen des brevets

(11) **EP 2 105 761 B1**

(12) **EUROPÄISCHE PATENTSCHRIFT**

(45) Veröffentlichungstag und Bekanntmachung des Hinweises auf die Patenterteilung:
**03.10.2012 Patentblatt 2012/40**

(51) Int Cl.:
*G01S 7/497* *(2006.01)*   *G01S 7/48* *(2006.01)*
*G01S 17/88* *(2006.01)*

(21) Anmeldenummer: **09153892.6**

(22) Anmeldetag: **27.02.2009**

(54) **Verfahren zur parallelen Ausrichtung eines Laserscanners zu einer Fahrbahn**

Method for parallel alignment of a laser scanner to a roadway

Procédé d'alignement parallèle d'un scanner laser sur une voie

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **26.03.2008 DE 102008016188**

(43) Veröffentlichungstag der Anmeldung:
**30.09.2009 Patentblatt 2009/40**

(73) Patentinhaber: **JENOPTIK Robot GmbH
40789 Monheim am Rhein (DE)**

(72) Erfinder: **Dr. Lehning, Michael
31137 Hildesheim (DE)**

(74) Vertreter: **Schaller, Renate
Patentanwälte Oehmke & Kollegen
Neugasse 13
07743 Jena (DE)**

(56) Entgegenhaltungen:
**WO-A1-2006/089544     DE-A1- 10 246 067**

**Beschreibung**

Die Erfindung betrifft ein Verfahren, mit dem die Scanebene eines am Rand einer Fahrbahn aufgestellten Laserscanners zur Fahrbahnoberfläche ausgerichtet wird und wie es gattungsgemäß aus der DE 199 02 287 A1 bekannt ist.

Bei der Verwendung von berührungsfreien Messgeräten für Verkehrsmessungen ist es wichtig, dass der Verlauf der Messstrahlung in Bezug auf die Lage der Fahrbahn vorbestimmt festgelegt wird.

Dies gilt insbesondere für Laserscanner, deren Scanebene parallel zur Fahrbahnoberfläche ausgerichtet werden muss, wenn die Messdaten in einer Ebene erfasst werden sollen.

Unter einem Laserscanner soll hier ein komplettes einsatzfähiges Gerät mit einem Gestell zum temporären oder dauerhaften Aufstellen verstanden werden, wie es in der Verkehrsmessung verwendet wird. Durch einen rotierenden oder schwenkenden Scanspiegel wird ein gepulster Laserstrahl, eine Scanebene aufspannend, in einem vorgegebenen Scanwinkelbereich abgelenkt. Über die Impuls-Laufzeitmessung wird aus den Reflexionssignalen die Entfernung eines im Scanbereich befindenden Objektes ermittelt. Um aus den Reflexionssignalen eindeutige Rückschlüsse, z. B. auf eine Fahrzeuglänge und damit einen Fahrzeugtyp zu schließen, oder die Anzahl der Fahrzeugachsen zu bestimmen, ist es wichtig, dass die Lage der Scanebene zur Fahrbahnebene ausgerichtet ist.

Aus der Praxis ist es bekannt, einen neben einer Fahrbahn aufgestellten Laserscanner manuell mittels eines Neigungsmessers auszurichten.

Zu diesem Zweck wird ein Neigungsmesser zuerst in Fahrrichtung, d. h. in Richtung der Fahrbahnlängsachse auf die Fahrbahnoberfläche aufgelegt und der angezeigte Neigungswinkel wird erfasst. Anschließend wird der Neigungsmesser in gleicher Richtung auf eine Abdeckplatte des Laserscanners, zu der die Scanebene zuvor kalibriert wurde, aufgelegt und der Laserscanner wird solange verkippt, bis der zuvor erfasste Neigungswinkel zur Anzeige kommt. Anschließend wird die Messung und Verkippung in die andere Richtung vorgenommen. Der Laserscanner wird dann in der eingestellten Position fixiert.

Ein solches Ausrichtverfahren ist durch die beschränkte Länge des Neigungsmessers sehr fehlerbehaftet, ist nicht automatisierbar und verlangt außerdem, dass die Scannerebene zuvor auf die Abdeckplatte kalibriert wurde.

Aus der DE 199 02 287 A1 ist ein automatisches Verfahren zum Ausrichten einer Scanebene zur Fahrbahnoberfläche beschrieben, bei dem ausgenutzt wird, dass sich eine Ebene durch nur drei Punkte definieren lässt. Es wird dabei vorausgesetzt, dass die Höhe des Senders des Laserscanners gegenüber der Fahrbahn bekannt ist. Zur Ausrichtung des Scanebene werden zwei wohldefinierte Körper im Scanbereich angeordnet, die in einer vorbestimmten Höhe, abhängig vom gewünschten Neigungswinkel zwischen der Scanebene und der Fahrbahn einen definierten Wert von Strahlung reflektieren. Im Falle, dass ein Neigungswinkel von 0° eingestellt werden soll, d. h. die Scanebene soll parallel zur Fahrbahnebene ausgerichtet werden, reflektiert der Körper in der bekannten Höhe des Senders des Laserscanners den definierten Wert. Der Sender wird solange in seiner Lage verstellt, bis die vom Körper reflektierte Strahlung den definierten Wert ausweist. Anschließend wird dieser Verfahrensschritt mit dem anderen Körper wiederholt, womit letztendlich die Lage der Scanebene festgelegt wird.

Nachteilig an diesem zweitgenannten Verfahren ist insbesondere, dass zum Ausrichten des Scanebene zum einen die Höhe des Senders gegenüber der Fahrbahn bekannt sein muss und zum anderen mit den beiden wohldefinierten Körpern spezielle Hilfsmittel erforderlich sind.

Der Erfindung liegt die Aufgabe zu Grunde, ein automatisches Verfahren zum Ausrichten der Scanebene eines Laserscanners parallel zu einer Fahrbahnoberfläche zu schaffen, bei dem die Höhe des Senders des Laserscanners nicht bekannt ist und das ohne zusätzliche Hilfsmittel durchgeführt werden kann.

Diese Aufgabe wird durch ein Verfahren mit den Merkmalen des Anspruches 1 gelöst.

Vorteilhafte Weiterbildungen sind in den Unteransprüchen beschrieben.

Anhand der Zeichnung wird ein erfindungsgemäßes Verfahren im Folgenden beispielhaft näher erläutert.

Es zeigen:

Fig. 1      einen zu einer Fahrbahn ausgerichteten Laserscanner

Fig. 2      eine Prinzipskizze zur Erläuterung der Ausrichtung der Scannerlängsachse

Fig. 3      eine Prinzipskizze zur Erläuterung der Ausrichtung der Scannerquerachse

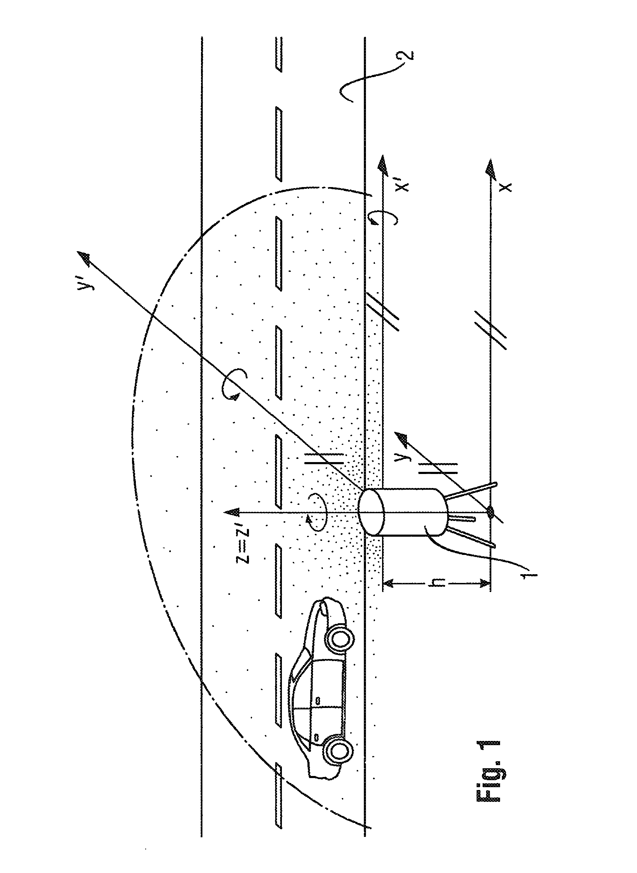

In Fig. 1 ist ein Laserscanner 1 gezeigt, der neben einer Fahrbahn 2 mit mehreren Fahrspuren aufgestellt ist.

In die Fahrbahnoberfläche, die als eben angenommen wird, ist ein kartesisches Fahrbahnkoordinatensystem gelegt, das durch eine Fahrbahnlängsachse x, die in Fahrbahnrichtung, gleich oder entgegen der Fahrtrichtung verläuft, sowie eine hierzu rechtwinklig angeordnete Fahrbahnquerachse y bestimmt ist, wobei die beiden Achsen gemeinsam in der als eine Ebene angenommenen Fahrbahnoberfläche liegen. Die z-Achse dieses kartesischen Koordinatensystems wird durch eine auf der Fahrbahnoberfläche stehende Flächennormale z gebildet.

Durch den aufgestellten Laserscanner 1 und der damit vorgegebenen Raumlage des Scannerspiegels, welcher einen Laserstrahl durch Schwenken oder Rotation des Scannerspiegels um eine Scanachse z' scannend ablenkt, ist das Scannerkoordinatensystem festgelegt. Im Falle eines Schwenkspiegels bestimmt das Spiegellot des nicht ausgelenkten Scannerspiegels die Scannerquerachse y'. Hierzu rechtwinklig verläuft die Scannerlängsachse x', die gemeinsam mit der Scannerquerachse y' die Scanebene aufspannt.

Im ausgerichteten Zustand liegen der Ursprung des Fahrbahnkoordinatensystems und des Scannerkoordinatensystems auf einer gemeinsamen Achse, die senkrecht durch die Fahrbahnebene, die Scanebene und den Durchstoßpunkt des Spiegellotes verläuft. Diese gemeinsame Achse ist für das Fahrbahnkoordinatensystem eine Flächennormale z und für das Scannerkoordinatensystem die Scanachse z', um die der Scannerspiegel bei Betrieb des Laserscanners 1 geschwenkt bzw. gedreht wird.

Wenn die Scanebene zur Fahrbahnebene ausgerichtet ist, verlaufen die Fahrbahnlängsachse x und die Scannerlängsachse x' sowie die Fahrbahnquerachse y und die Scannerquerachse y' zueinander parallel. Die Ebenen haben zueinander einen Abstand, der als Höhe h bezeichnet wird.

Nach dem bloßen Aufstellen des Laserscanners 1 am Fahrbahnrand ist die Scanebene zur Fahrbahnebene um einen unbekannten Längsneigungswinkel δ und einen unbekannten Querneigungswinkel φ gegenüber der Fahrbahnebene geneigt.

Diese Neigungswinkel sind eher klein, da der Laserscanner 1 zur Fahrbahn 2 hin empirisch so aufgestellt wird, dass er möglichst waagerecht steht, "mit Blick" senkrecht zur Fahrbahnrichtung.

Zum Ausrichten des Laserscanners 1 werden im Wesentlichen folgende drei Verfahrensschritte durchgeführt:

1. Beseitigen des Längsneigungswinkels δ durch Ausrichten der Scannerlängsachse x' zur Fahrbahnlängsachse x,
2. Beseitigen des Querneigungswinkels φ durch Ausrichten der Scanachse z' zur Flächennormalen z der Fahrbahnoberfläche und
3. Ermittlung der Höhe h, bei Bedarf.

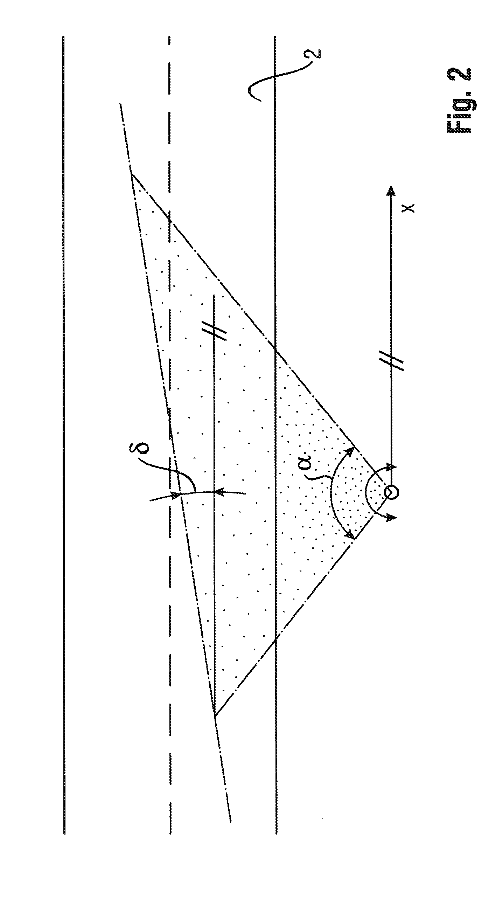

Die Ausrichtung der Scannerlängsachse x' auf die Fahrbahnlängsachse x soll anhand von Fig. 2 erläutert werden.

Hierbei wird der Laserscanner 1 um die Scannerlängsachse x' soweit geneigt, bis über den gesamten Scanwinkelbereich α Reflexionssignale erfasst werden, die durch die Reflexion des Laserstrahls an Messpunkten auf der Fahrbahnoberfläche verursacht werden. Aus den Reflexionssignalen werden Entfernungswerte abgeleitet, die jeweils einer Winkelstellung des Scannerspiegels zugeordnet werden können und somit gemeinsam eine auf der Fahrbahn 2 liegende Gerade beschreiben. Diese Gerade präsentiert die Richtung der Scannerlängsachse x' und schließt gemeinsam mit der Fahrbahnlängsachse x einen bis dahin unbekannten Längsneigungswinkel δ ein.

Der Laserscanner 1 wird jetzt soweit um die Scanachse z' gedreht, bis die Messpunkte, in ihrer Lage bestimmt durch Entfernungswerte und die ihnen zugeordneten Scanwinkel, eine Gerade beschreiben, die einen Längsneigungswinkel δ gleich 0° zur Fahrbahnlängsachse x aufweist und damit parallel zu ihr verläuft. Aus den Reflexionssignalen lassen sich dann für die einzelnen Messpunkte gleiche senkrechte Abstände zum Laserscanner 1 ableiten.

Die Scanebene ist jetzt in Richtung der Fahrbahnlängsachse x ausgerichtet, ist aber zur Fahrbahnquerachse y noch um einen Querneigungswinkel φ geneigt.

Sofern, wie üblich, der Scanwinkelbereich α durch ein Schwenken um einen gleichen Winkel α/2 gegenüber der Scannerquerachse y' gebildet wird, gelangt man zu einem nahezu gleichem Ergebnis, wenn man den Laserscanner 1 soweit um die Scanachse z' dreht, bis aus den Messwerten, die den begrenzenden Randstrahlen des Scanbereiches zuzuordnen sind, gleiche Entfernungen abgeleitet werden. Der Rechenaufwand ist in diesem Fall wesentlich geringer.

Der Laserscanner 1 wird nach diesem Verfahrensschritt abschließend gegenüber der Drehung um seine Scanachse z' lagegesichert.

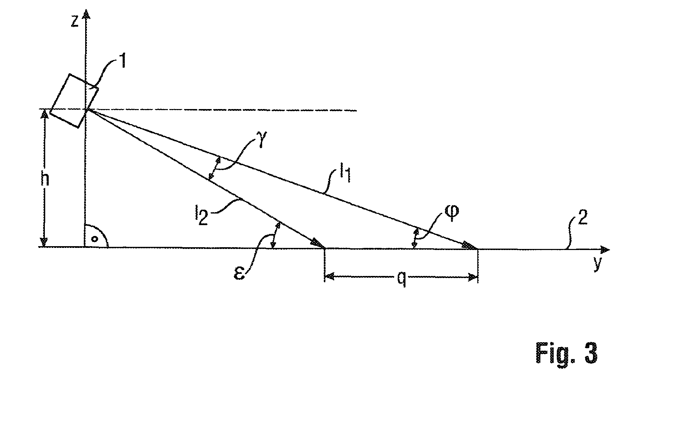

Das Ausrichten der Scanachse z' zur Flächennormalen z der Fahrbahnoberfläche und damit das Beseitigen des Querneigungswinkels φ zwischen der Scannerquerachse y' und der Fahrbahnquerachse y soll anhand von Fig. 3 erläutert werden.

Die y-z-Ebene des Fahrbahnkoordinatensystems ist in Fig. 3 in die Zeichenebene gelegt.

Aus dem vorhergehenden Verfahrensschritt ist ein erster Entfernungswert $l_1$, der einem Laserstrahl beim Scanwinkel α=0° und einem unbekannten Querneigungswinkel φ zugeordnet wird, bekannt.

Diesen Querneigungswinkel φ gilt es im nächsten Verfahrensschritt zu ermitteln, um dann auch die Scanachse z' zur Flächennormalen z der Fahrbahnoberfläche ausrichten zu können.

Der Laserscanner 1 wird jetzt um die Scannerlängsachse x' um einen vorgegebenen Kippwinkel γ weiter geneigt und mit einer erneuten Messung wird bei gleichem Scanwinkel α=0° ein zweiter Entfernungswert $l_2$ ermittelt. Mit den bekannten Werten $l_1$, $l_2$ und γ können durch einfache Trigonometrie mit Hilfe des Kosinussatzes und des Sinussatzes erst der Längenwert q und dann der Querneigungswinkel φ, der hier einem der Innenwinkel des gebildeten Dreiecks entspricht, wie folgt bestimmt werden.

$$q = \sqrt{\left(l_1^2 + l_2^2 - 2l_1 l_2 \cos(\gamma)\right)} .$$

$$\sin(\phi) = l_2 \sin (\gamma) / q$$

Der Laserscanner 1 muss dann lediglich zurück um den Kippwinkel $\gamma$ und zusätzlich um den jetzt bekannten Querneigungswinkel $\phi$ von der Fahrbahnquerachse y weggekippt werden, damit die Scannerquerachse y' parallel zur Fahrbahnquerachse y ausgerichtet ist.

Die Höhe h lässt sich nunmehr ebenfalls wie folgt ermitteln.

$$h = l_2 \sin (\varepsilon), \text{ wobei } \varepsilon = \gamma + \varphi \text{ ist}$$

Die Kenntnis der Höhe h ist insbesondere dann von Interesse, wenn der Laserscanner 1 in einem zur Fahrbahnebene abfallenden Randbereich aufgestellt wird und somit der Abstand der Scanebene zur Fahrbahnebene nicht aus einer eingestellten Gestellhöhe einfach ableitbar ist.

Das vorbeschriebene Verfahren kann mit einer mit dem Laserscanner 1 verbundenen motorisierten Neige-Einheit vollautomatisiert durchgeführt werden, indem die Winkelbereiche abgestimmt auf die Scanbewegung des Scanspiegels vollautomatisch durchfahren werden und aus den durch den Laserscanner 1 ermittelten Messwerten die entsprechenden Werte ausgewählt werden, um wie beschrieben die Achsen des Laserscanners 1 auszurichten, indem die Neige-Einheit entsprechend angesteuert wird.

Der besondere Vorteil des Verfahrens besteht darin, dass der Laserscanner 1 ungeachtet der Ebenheit und des Niveaus des Aufstellortes zur Fahrbahnebene dort aufgestellt werden kann, wo es für die Messsituation am geeignetsten ist. Der Laserscanner 1 kann seine Scanebene allein durch Anmessen der Fahrbahnoberfläche mit der aufgezeigten Datenverarbeitung und den entsprechenden Verkippungen zur Fahrbahnoberfläche ausrichten und die Höhe h, welche dafür bestimmend ist, in welcher Höhe zu erfassende Fahrzeuge erfasst werden, kann ermittelt werden.

Bezugszeichenliste

1   Laserscanner
2   Fahrbahn

x   Fahrbahnlängsachse
y   Fahrbahnquerachse
z   Flächennormale der Fahrbahnoberfläche

x'   Scannerlängsachse
y'   Scannerquerachse
z'   Scanachse

$\alpha$   Scanwinkelbereich
$\delta$   Längsneigungswinkel
$\phi$   Querneigungswinkel
$\gamma$   Kippwinkel

h   Höhe
$l_1$   erster Entfernungswert
$l_2$   zweiter Entfernungswert
q   Längenwert

**Patentansprüche**

1.   Verfahren zum parallelen Ausrichten der Scanebene eines am Rand einer Fahrbahn (2) aufgestellten Laserscanners (1) zu der als eine Ebene angenommenen Fahrbahnoberfläche, **dadurch gekennzeichnet,**
**dass** die Scanebene, die ein kartesisches Scankoordinatensystem aufspannt, mit einer in der Scanebene liegenden Scannerlängsachse (x') und einer Scannerquerachse (y') sowie einer Scanachse (z'), um die der Scanspiegel des Laserscanners (1) gedreht bzw. geschwenkt wird, durch Neigen des Laserscanners (1) um die Scannerlängsachse (x') zur Fahrbahnoberfläche hin geneigt wird, bis der scannende Laserstrahl über seinen gesamten Scanwinkelbereich ($\alpha$) von der Fahrbahnoberfläche reflektiert wird,
**dass** der Laserscanner (1) dann um die Scanachse (z') soweit geschwenkt wird, bis aus den Reflexionssignalen gleiche senkrechte Abstände zum Laserscanner (1) abgeleitet werden können,
**dass** der Scanspiegel dann in einer Scanwinkelstellung fixiert wird und aus einem Reflexionssignal ein erster Entfernungswert ($l_1$) abgeleitet wird,
**dass** der Laserscanner (1) dann um die Scannerlängsachse (x') um einen vorgegebenen Kippwinkel ($\gamma$) geneigt wird, aus einem weiteren Reflexionssignal ein zweiter Entfernungswert ($l_2$) abgeleitet wird und aus den Entfernungswerten ($l_1$, $l_2$) sowie dem Kippwinkel ($\gamma$) über trigonometrische Rechnung der Querneigungswinkel ($\phi$) ermittelt wird, um den Laserscanner (1) abschließend um den Kippwinkel ($\gamma$) zurück und den nun bekannten Querneigungswinkel ($\phi$) zu verkippen, womit die Scanebene parallel zur Fahrbahnebene ausgerichtet ist.

2.   Verfahren nach Anspruch 1, **dadurch gekennzeichnet,**
**dass** aus den ermittelten Werten auch die Höhe (h) der Scanebene gegenüber der Fahrbahnoberfläche ermittelt wird.

3.   Verfahren nach Anspruch 1, **dadurch gekennzeichnet,**
**dass** die Schwenk- und Neigebewegungen des Laserscanners (1) vollautomatisiert durchgeführt werden.

## Claims

1. A method for parallel alignment of the scanning plane of a laser scanner (1), positioned at the edge of a roadway (2), with respect to the road surface which is assumed to be a plane,
   **characterised in that**
   the scanning plane, which delineates a Cartesian coordinate scanning system, comprising a longitudinal scanner axis (x') located in the scanning plane, and a transverse scanner axis (y'),
   as well as a scanning axis (z') about which the scanning mirror of the laser scanner (1) is rotated or swivelled, is inclined towards the road surface by tilting the laser scanner (1) about the longitudinal scanner axis (x') until the scanning laser beam is reflected by the road surface over the entire scanning angle range ($\alpha$) of the scanning laser beam,
   the laser scanner (1) is then pivoted about the scanning axis (z') until equal vertical distances to the laser scanner (1) can be derived from the reflected signals,
   the scanning mirror is then fixed in a scanning angle position and a first distance value ($I_1$,) is derived from a reflected signal,
   the laser scanner (1) is then tilted about the longitudinal scanner axis (x') by a predetermined tilt angle ($\gamma$), a second distance value ($I_2$) is derived from another reflected signal, and the transverse inclination angle ($\varphi$) is determined from the distance values ($I_1$, $I_2$) as well as the tilt angle ($\gamma$) by trigonometric calculation, so as to finally tilt the laser scanner (1) back by the tilt angle ($\gamma$) and by the transverse inclination angle ($\varphi$), now known, resulting in the parallel alignment of the scanning plane to the plane of the roadway.

2. The method according to claim 1, **characterised in that** the height (h) of the scanning plane with respect to the road surface is also determined from the obtained values.

3. The method according to claim 1, **characterised in that** the pivoting and tilting movements of the laser scanner (1) are carried out fully automatically.

## Revendications

1. Procédé d'alignement parallèle du plan de balayage d'un scanner laser (1), disposé au bord d'une chaussée (2), par rapport à la surface de la chaussée qui est supposée être un plan,
   **caractérisé en ce que**
   le plan de balayage, définissant un système de coordonnées cartésiennes de balayage qui présente un axe longitudinal du scanner (x') disposé dans le plan de balayage et un axe transversal du scanner (y') ainsi qu'un axe de balayage (z') autour duquel tourne ou pivote le miroir de balayage du scanner laser (1), est incliné vers la surface de la chaussée par basculement du scanner laser (1) autour de l'axe longitudinal du scanner (x') jusqu'à ce que le faisceau laser balayant soit réfléchi par la surface de la chaussée sur toute la gamme d'angles de balayage ($\alpha$) dudit faisceau laser,
   ledit scanner laser (1) est ensuite pivoté autour de l'axe de balayage (z') jusqu'à pouvoir dériver des distances verticales identiques par rapport au scanner laser (1),
   le miroir de balayage est ensuite fixé dans une position d'angle de balayage et une première valeur de distance ($I_1$) est dérivée d'un signal de réflexion,
   le scanner laser (1) est ensuite basculé autour de l'axe longitudinal du scanner (x') sous un angle de basculement prédéfini ($\gamma$), une deuxième valeur de distance ($I_2$) est dérivée d'un autre signal de réflexion, et l'angle d'inclinaison transversale ($\varphi$) est déterminé à partir des valeurs de distance ($I_1$, $I_2$) ainsi que de l'angle de basculement ($\gamma$) par calcul trigonométrique, afin de basculer finalement le scanner laser (1) inversement sous l'angle de basculement ($\gamma$) et sous l'angle d'inclinaison transversale ($\varphi$), désormais connu, ce qui produit l'alignement parallèle du plan de balayage sur le plan de la chaussée.

2. Procédé selon la revendication 1, **caractérisé en ce que** l'hauteur (h) du plan de balayage par rapport à la surface de la chaussée est également déterminée à partir des valeurs obtenues.

3. Procédé selon la revendication 1, **caractérisé en ce que** les mouvements de pivotement et de basculement du scanner laser (1) se font de manière complètement automatique.

Fig. 1

Fig. 2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19902287 A1